# EUROPÄISCHE PATENTSCHRIFT

(11) **EP 1 251 048 B1**
(45) Veröffentlichungstag und Bekanntmachung des Hinweises auf die Patenterteilung: **06.07.2005**
(21) Anmeldenummer: 02008540.3
(22) Anmeldetag: 16.04.2002
(51) Int. Cl.: B60S 1/08, B60S 1/48, B60Q 1/48, B60Q 1/52

(54) **Elektronisches Gerät mit einem Gehäuse zur Anbringung an einer Scheibe eines Kraftfahrzeuges**
Electronic device with a housing to be fastened to a windscreen of a motor vehicle
Dispositif électronique avec un carter pour fixer sur une vitre de véhicule à moteur

(30) Priorität: 20.04.2001 DE 10119219
(43) Veröffentlichungstag der Anmeldung: 23.10.2002
(73) Patentinhaber: Hella KGaA Hueck & Co., 59552 Lippstadt (DE)
(72) Erfinder: Schäfer, Heiko, 59597 Erwitte (DE); Schulte, Michael, 33106 Paderborn (DE)

(56) Entgegenhaltungen:
- EP-A- 0 911 231
- DE-A- 4 017 063
- DE-A- 4 101 995
- US-A- 5 262 640

## Beschreibung

Die Erfindung betrifft ein elektronisches Gerät mit einem Gehäuse zur Anbringung an einer Scheibe eines Kraftfahrzeugs, wobei die Ankopplung des Gehäuses an die Fahrzeugscheibe über ein, aus einem flexiblen gummi- oder gelartigen Material bestehenden Kopplungsmedium erfolgt.

Bei der Adaption von elektronischen Geräten an die Scheiben von Fahrzeugen ist die direkte Ankopplung an die Fahrzeugscheibe über ein Kopplungsmedium, welches typischerweise aus einem flexiblen gummi- oder gelartigen Material wie z. B. Silgel oder einem Silikonformteil besteht, aus funktionalen und oder designtechnischen Gründen notwendig.

Das Kopplungsmedium kann sowohl die Aufgabe der optischen oder auch mechanischen Ankopplung des elektronischen Gerätes (wie z.B. Regensensor, Lichtsensor, Precrashsensor, Kamerasysteme, Kompaßsensor, Maudsensor, Einparksensorik, Sensorik für adaptive Geschwindigkeitsregelung etc.) erfüllen. Entweder werden diese Geräte direkt durch das Kopplungsmedium auf der Scheibenoberfläche verklebt oder sie werden über ein dauerhaft wirkendes Federelement an die Scheibe gepreßt, wobei das einzusetzende Kopplungsmedium keine Haltekraft übernimmt.

Aus der EP 0 911 231 A2 ist ein Regensensor bekannt, der über eine Folie als Kopplungsmedium mit der Scheibe eines Kraftfahrzeuges verklebt wird.

Hierbei ist die Adaption des jeweiligen Gerätes an die Oberfläche der Fahrzeugscheibe wichtig. Die Scheiben von Fahrzeugen weisen grundsätzlich Abweichungen (Toleranzen) im Hinblick auf ihre Krümmungsgeometrie auf. Dies führt dazu, daß das Kopplungsmedium diese Toleranzen der Scheiben ausgleichen muß, um die Funktion bzw. die gewünschte äußere Erscheinung (Design) des anzukoppelnden Gerätes zu gewährleisten. Dieser Toleranzausgleich durch das Kopplungsmedium unterliegt Grenzen.

Die Ausgestaltung des Kopplungsmediums ist aus funktionalen Gründen und /oder prozeßtechnischen Gründen bei der Fertigung beschränkt. So kann die Ausgestaltung des Kopplungsmediums in der Regel nur für einen eingeschränkten Scheibenkrümmungsbereich realisiert werden. Dies führt dazu, daß die saubere und vor allem blasenfreie Ankopplung bei stark unterschiedlich gekrümmten Scheiben äußerst problematisch ist.

Besonders bei stark gekrümmten Scheibenoberflächen ist die Gefahr des Einschließens von Luftblasen bei der Montage des Gerätes gegeben. Kopplungsmedien wie z.B. Silgele können in gewissem Umfang kleinere Luftblasen abhängig von Zeit und Aufpreßdruck eliminieren. Große Luftblasen allerdings verbleiben in dem Bereich des Kopplungsmediums. Durch den Anpreßdruck des Federelementes stellt sich ein ausgeglichenes Druckverhältnis zwischen Kopplungsmedium und eingeschlossener Luftblase ein. Durch die für solche Kopplungsmedien typische Viskosität, kann der innere Druck im Kopplungsmedium im Randbereich der anzukoppelnden Fläche deutlich höher sein als im Bereich der eingeschlossenen Luftblase.

Dieser Effekt hängt direkt von der Oberflächengestaltung des anzukoppelnden Gerätes und der Scheibenkrümmung im Einbaubereich ab. Dies führt dazu, daß die eingeschlossene Luftblase aufgrund ihres Bestrebens zu expandieren, typischerweise in denjenigen Bereich zwischen Kopplungsmedium und Scheibe wandert, welcher den geringsten inneren Druck im Kopplungsmedium aufweist. Dies führt zum Beispiel bei einer rund ausgeführten Gerätekontur dazu, daß die eingeschlossene Luftblase bei der Adaption an eine gekrümmte Scheibe in die Mitte der Kopplungsfläche wandert. Somit ist die Luftblase gleichmäßig von Kopplungsmaterial von höherem inneren Druck umgeben und kann daher nicht entweichen, um außerhalb des Bereiches des Kopplungsmediums unter Atmosphärendruck zu expandieren.
Die Neigung zum Einschluß von Luftblasen und der Ort ihres Auftretens hängt direkt von Scheibenkrümmung und Gestaltung der Geräteoberfläche inklusive des Kopplungsmediums ab.

Aus der DE 40 17 063 A1 ist ein elektrisches Gerät bekannt, dessen Stirnfläche über ein Kopplungsmedium in Form eines Folienstreifens und in Form von Folienstücken, an der Scheibe befestigt wird, wobei im Bereich der potentiellen Blasenbildung zwischen der Fahrzeugscheibe und dem Koppelmedium ein mit der Umgebungsluft verbundener Abluftkanal vorhanden ist.

Es ist die Aufgabe der Erfindung ein elektronisches Gerät mit einer speziellen Ausgestaltung und Anordnung des Abluftkanals zu schaffen.

Die Oberfläche des Gerätes und/oder das Kopplungsmedium ist dabei so gestaltet, daß für Luftblasen, die sich bei der Montage bilden können, immer die Möglichkeit zum Entweichen (Ablüften) gegeben ist.

Im folgenden werden zwei Ausführbeispiele des erfindungsgemäßen elektronischen Gerätes anhand der Zeichnung näher erläutert. Da die beiden Ausführungsbeispiele in vielen Merkmalen übereinstimmen, sind diese jeweils in beiden Figuren mit gleichen Bezugszeichen bezeichnet worden. Die folgende Beschreibung gilt zunächst für beide Figuren gleichermaßen.

Dargestellt ist ein Lichtsensor für ein Kraftfahrzeug. Das Gerät weist ein zylindrisches Gehäuse (1) auf, in welchem verschiedene Sensoren angeordnet sind. Innerhalb des Gehäuses kann zudem eine, in der Zeichnung nichtdargestellte elektronische Schaltungsanordnung zur Ansteuerung der Sensorik bzw. zur Verarbeitung von Sensorsignalen vorgesehen sein. Die Zu- und Ableitung elektrischer Signal zu dem Gerät erfolgt über einen an das Gehäuse (1) angeformten Anschlußstecker (5).

Das Gehäuse (1) besitzt auf seiner Stirnfläche (2) eine Lichteintrittsöffnung für einen optischen Sensor (4), der die Umgebungshelligkeit um das Fahrzeug detektiert.

Die Stirnfläche (2) des Gehäuses (1) weist eine erste Umrandung (3) auf, die sich aus der Verlängerung der Mantelfläche des zylindrischen Gehäuses (1) über die Stirnfläche (2) hinaus ergibt. Innerhalb dieser ersten Umrandung (3) ist auf die Stirnfläche (2) ein in der Zeichnung nicht dargestelltes, flexibles gummi- oder gelartiges Kopplungsmedium, beispielsweise Silgel oder ein Silikonformteil, aufgebracht, welches die optische und mechanische Ankoppelung des Gerätes an die Fahrzeugscheibe ermöglicht.

Bei der Montage des Gehäuses an die, in der Zeichnung nicht dargestellte Fahrzeugscheibe ergibt sich folgendes Problem: Fahrzeugscheiben weisen an den bevorzugten Anbringungsorten solcher elektronischer Geräte eine, im allgemeinen in Richtung auf das Gehäuse konkave, Krümmung auf, die zudem erheblich toleranzbehaftet ist. Abhängig von der Scheibenkrümmung ist ab einer gewissen Größe der Stirnfläche (2) ein Einschließen von Luft zwischen Gehäuse (1) und Fahrzeugscheibe nahezu unvermeidlich. Aufgrund der abdichtenden Eigenschaften des Kopplungsmedium können einmal eingeschlossene Luftblasen den Bereich des Kopplungsmediums nicht wieder verlassen.

Dies stellt einerseits ein ästhetisches Problem dar, da sich eingeschlossene Luftblasen als helle Bereiche vor dem im allgemeinen dunklen Hintergrund des Sensorgehäuses abheben. Andererseits bewirken sie aber auch technische Probleme, da sie die Funktion der Sensorik beeinträchtigen können. So kann insbesondere eine Luftblase im Einfallsbereich des optischen Sensors das Sensorsignal unbrauchbar machen, wodurch das gesamte Gerät als funktionsunfähig anzusehen ist.

Zur Lösung dieses Problems besitzt das erfindungsgemäße Gerät Abluftkanäle, die mit der Umgebungsluft des Gerätes in Verbindung stehen und die ein nachträgliches Entlüften des elektronischen Gerätes ermöglichen.

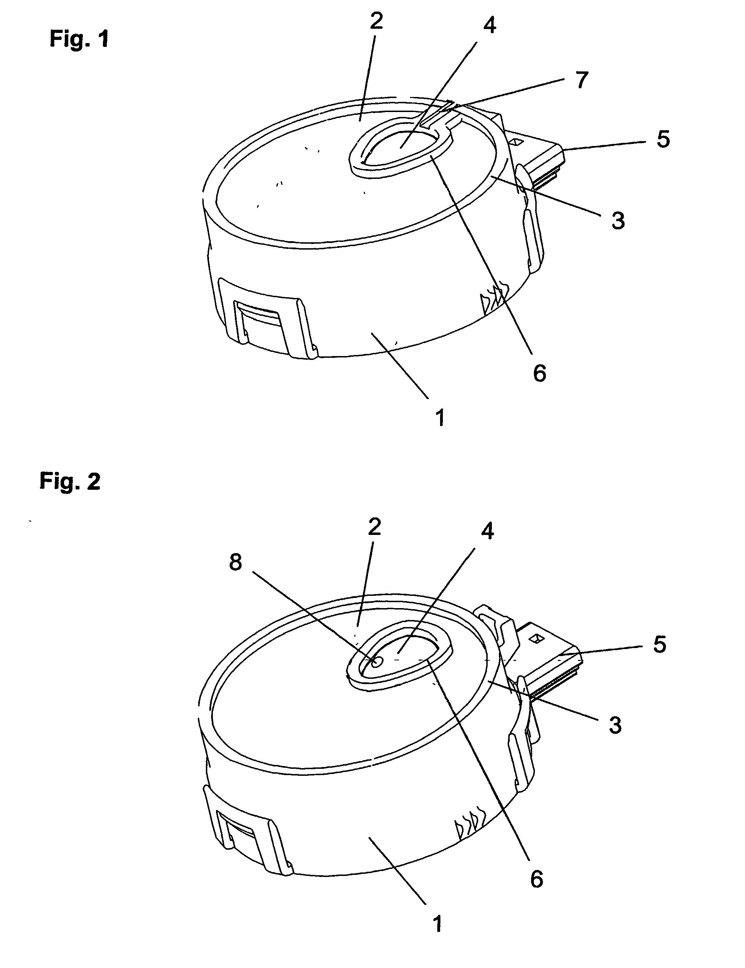

Die Figuren 1 und 2 zeigen zwei mögliche Ausführungen dieser Abluftkanäle. In der Figur 1 ist mittels zweier Stege ein Abluftkanal (7) zwischen der ersten Umrandung (3) und der den optischen Sensor (4) umschließenden zweiten Umrandung (6) angeformt, über den im Bereich des optischen Sensors (4) befindliche Luft nach außen entweichen kann.

Bei der in der Figur 2 dargestellten Ausführung ist der Abluftkanal im Bereich des optischen Sensors (4) in das Innere des Gehäuse geführt. Erkennbar ist der als Abluftöffnung (8) ausgebildete Endabschnitt des Abluftkanals. Der Abluftkanal kann vorteilhaft so ausgebildet sein, daß er durch das Gehäuse (1) bis zu einer weiteren Außenfläche des Gehäuses (1) führt.

### Bezugszeichen

- 1: Gehäuse
- 2: Stirnfläche
- 3: erste Umrandung
- 4: optischer Sensor
- 5: Anschlußstecker
- 6: zweite Umrandung
- 7: Abluftkanal
- 8: Abluftöffnung

## Patentansprüche

1. Elektronisches Gerät mit einem Gehäuse (1) zur Anbringung an einer Scheibe eines Kraftfahrzeuges,
- wobei die Ankopplung des Gehäuses (1) an die Fahrzeugscheibe über ein, aus einem flexiblen gummi- oder gelartigen Material bestehenden Kopplungsmedium erfolgt,
- wobei bei der Montage des Gerätes an die Fahrzeugscheibe die Gefahr der Luftblasenbildung zwischen der Fahrzeugscheibe und dem Kopplungsmedium besteht,
- wobei im Bereich der potentiellen Blasenbildung zwischen der Fahrzeugscheibe und dem Koppelmedium ein mit der Umgebungsluft verbundener Abluftkanal (7) vorhanden ist,
**dadurch gekennzeichnet, dass**
der Abluftkanal (7) als ein vom potentiellen Ort der Luftblasenbildung zur Umgebungsluft reichender kopplungsmediumsfreier Bereich durch das Kopplungsmedium ausgebildet ist, der bis zu einer Außenfläche des Gehäuses (1) geführt ist.

2. Elektronisches Gerät nach Anspruch 1,
**dadurch gekennzeichnet, dass**
- auf der Stirnfläche (2) des Gehäuses (1) eine erste äußere Umrandung (3) vorgesehen ist,
- das Kopplungsmedium innerhalb dieser ersten Umrandung (3) auf der Stirnfläche (2) des Gehäuses (1) aufgebracht ist,
- auf der Stirnfläche (1) des Gehäuses (1) eine zweite Umrandung (6) vorgesehen ist, wobei die zweite Umrandung (6) innerhalb der ersten Umrandung (3) angeordnet ist,
- zwischen der ersten Umrandung (6) und der zweiten Umrandung (3) zwei Stege zur Ausbildung des Abluftkanals (7) angeformt sind.

3. Elektronisches Gerät mit einem Gehäuse (1) zur Anbringung an einer Scheibe eines Kraftfahrzeuges,
- wobei die Ankopplung des Gehäuses (1) an die Fahrzeugscheibe über ein, aus einem flexiblen gummi- oder gelartigen Material bestehenden Kopplungsmedium erfolgt,
- wobei bei der Montage des Gerätes an die Fahrzeugscheibe die Gefahr der Luftblasenbildung zwischen der Fahrzeugscheibe und dem Kopplungsmedium besteht,
- wobei im Bereich der potentiellen Blasenbildung zwischen der Fahrzeugscheibe und dem Koppelmedium ein mit der Umgebungsluft verbundener Abluftkanal vorhanden ist,
**dadurch gekennzeichnet, dass**
- auf der Stirnfläche (2) des Gehäuses (1) eine erste äußere Umrandung (3) vorgesehen ist,
- das Kopplungsmedium innerhalb dieser ersten Umrandung (3) auf die Stirnfläche (2) des Gehäuses (1) aufgebracht ist,
- der Abluftkanal als ein vom potentiellen Ort der Luftblasenbildung zur Umgebungsluft reichender kopplungsmediumsfreier Bereich ausgebildet ist, der von einer Abluftöffnung (8) in der Stirnfläche (2) des Gehäuses (1) ausgeht und in das Innere des Gehäuses (1) geführt ist,
- die Abluftöffnung (8) innerhalb einer zweiten Umrandung (6) auf der Stirnfläche (2) des Gehäuses (1) angeordnet ist, wobei die zweite Umrandung (6) innerhalb der ersten Umrandung (3) angeordnet ist.

4. Elektronisches Gerät nach Anspruch 3,
**dadurch gekennzeichnet, dass**
der Abluftkanal durch das Innere des Gehäuses (1) bis zu einer Außenfläche des Gehäuses (1) geführt ist.

5. Elektronisches Gerät nach Anspruch 1 oder 3,
**dadurch gekennzeichnet, dass**
das elektronische Gerät mindestens einen optischen Sensor aufweist.

6. Elektronisches Gerät nach Anspruch 1 oder 3,
**dadurch gekennzeichnet, dass**
das elektronische Gerät Sender und Empfänger für infrarote Strahlung aufweist.

## Claims

1. Electronic device comprising a housing (1) to be fitted to the windscreen of a motor vehicle, in which the housing (1) is coupled to the vehicle windscreen by means of a coupling medium consisting of a flexible rubber-like or gel-like material, in which there is a risk of air bubbles forming between the vehicle windscreen and the coupling medium when the device is mounted on the vehicle windscreen and in which an air discharge duct (7) communicating with the ambient air is provided in the region of the potential bubble formation between the vehicle windscreen and the coupling medium, **characterised in that** the air discharge duct (7) is designed as a coupling medium-free region leading through the coupling medium from the potential location of the air bubble formation to the ambient air and extending as far as an outer surface of the housing (1).

2. Electronic device according to claim 1, **characterised in that** a first outer surround (3) is provided on the end face (2) of the housing (1), the coupling medium is applied to the end face (2) of the housing (1) within this first surround (3), a second surround (6) is provided on the end face (2) of the housing (1), the second surround (6) being arranged within the first surround (3), and two ribs are moulded on between the first surround (6) and the second surround (3) in order to form the air discharge duct (7).

3. Electronic device comprising a housing (1) to be fitted to the windscreen of a motor vehicle, in which the housing (1) is coupled to the vehicle windscreen by means of a coupling medium consisting of a flexible rubber-like or gel-like material, in which there is a risk of air bubbles forming between the vehicle windscreen and the coupling medium when the device is mounted on the vehicle windscreen and in which an air discharge duct communicating with the ambient air is provided in the region of the potential bubble formation between the vehicle windscreen and the coupling medium, **characterised in that** a first outer surround (3) is provided on the end face (2) of the housing (1), the coupling medium is applied to the end face (2) of the housing (1) within this first surround (3), the air discharge duct is designed as a coupling medium-free region leading from the potential location of the air bubble formation to the ambient air, departing from an air discharge opening (8) in the end face (2) of the housing (1) and extending into the interior of the housing (1), and the air discharge opening (8) is arranged on the end face (2) of the housing (1) within a second surround (6), the second surround (6) being arranged within the first surround (3).

4. Electronic device according to claim 3, **characterised in that** the air discharge duct extends through the interior of the housing (1) as far as an outer surface of the housing (1).

5. Electronic device according to claim 1 or claim 3, **characterised in that** the electronic device has at least one optical sensor.

6. Electronic device according to claim 1 or claim 3, **characterised in that** the electronic device has a transmitter and a receiver for infrared radiation.

## Revendications

1. Appareil électronique comportant un boîtier (1), destiné à être monté sur une vitre d'un véhicule automobile, dans lequel
- le couplage du boîtier (1) à la vitre de véhicule a lieu via un produit de couplage flexible analogue à du caoutchouc ou à un gel,
- on court le risque de formation de bulles d'air entre la vitre de véhicule et le produit de couplage lors du montage de l'appareil sur la vitre de véhicule,
- un canal d'évacuation d'air (7) relié à l'air ambiant est situé dans la région de la formation potentielle de bulles entre la vitre de véhicule et le produit de couplage,
**caractérisé en ce que**
le canal d'évacuation d'air (7) est réalisé à travers le produit de couplage en tant que zone libre de produit de couplage allant du lieu potentiel de la formation de bulles d'air jusqu'à l'air ambiant, zone qui est menée jusqu'à une surface extérieure du boîtier (1).

2. Appareil électronique selon la revendication 1, **caractérisé en ce que**
- on prévoit sur la face frontale (2) du boîtier (1) une première bordure extérieure (3),
- le produit de couplage est appliqué sur la face frontale (2) du boîtier (1) à l'intérieur de cette première bordure (3),
- on prévoit sur la face frontale (2) du boîtier (1) une deuxième bordure extérieure (6), la deuxième bordure extérieure (6) étant agencée à l'intérieur de la première bordure (3),
- entre la première bordure (3) et la deuxième bordure (6) sont conformées deux barrettes pour réaliser le canal d'évacuation d'air (7).

3. Appareil électronique comportant un boîtier (1), destiné à être monté sur une vitre d'un véhicule automobile, dans lequel
- le couplage du boîtier (1) à la vitre de véhicule a lieu via un produit de couplage flexible analogue à du caoutchouc ou à un gel,
- on court le risque de formation de bulles d'air entre la vitre de véhicule et le produit de couplage lors du montage de l'appareil sur la vitre de véhicule,
- un canal d'évacuation d'air (7) relié à l'air ambiant est situé dans la zone de la formation potentielle de bulles entre la vitre de véhicule et le produit de couplage,
**caractérisé en ce que**
- on prévoit sur la face frontale (2) du boîtier (1) une première bordure extérieure (3),
- le produit de couplage est appliqué sur la face frontale (2) du boîtier (1) à l'intérieur de cette première bordure (3),
- le canal d'évacuation d'air (7) est réalisé en tant que zone libre de produit de couplage allant du lieu potentiel de la formation de bulles d'air jusqu'à l'air ambiant, zone qui part d'un orifice d'évacuation d'air (8) dans la face frontale (2) du boîtier (1) et qui est mené jusqu'à l'intérieur du boîtier (1),
- l'orifice d'évacuation d'air (8) est agencé à l'intérieur d'une deuxième bordure (6) sur la face frontale (2) du boîtier (1), la deuxième bordure (6) étant agencée à l'intérieur de la première bordure (3).

4. Appareil électronique selon la revendication 3,
**caractérisé en ce que**
le canal d'évacuation d'air est mené à travers l'intérieur du boîtier (1) jusqu'à une surface extérieure du boîtier (1).

5. Appareil électronique selon l'une ou l'autre des revendications 1 et 3,
**caractérisé en ce que**
l'appareil électronique présente au moins un capteur optique.

6. Appareil électronique selon l'une ou l'autre des revendications 1 et 3,
**caractérisé en ce que**
l'appareil électronique présente des émetteurs et des récepteurs pour du rayonnement infrarouge.
